# EUROPEAN PATENT APPLICATION

(11) **EP 0 579 303 A2**
(43) Date of publication of application: **19.01.1994**
(21) Application number: 93201774.2
(22) Date of filing: 21.06.1993
(51) Int. Cl.: H02K 5/173, H02K 5/124, F16C 33/76

(54) **Electrical machine and slinger therefor**

(30) Priority: 11.07.1992 GB 9214774
(71) Applicant: GENERAL MOTORS CORPORATION, Detroit Michigan 48202 (US)
(72) Inventor: Collin, Pierre Jules Augustin Ghislain, Tintigny 6730 (BE)
(74) Representative: Denton, Michael John

(57) **Abstract**

An electrical machine, such as an electric motor, generator or alternator, comprises an armature (54) carried on an armature shaft (52); a stator cooperable magnetically with the armature (54); a housing (66); and first and second bearing assemblies (12,68) cooperable with the armature shaft (52) for securing the armature (54) rotatably in the housing (66). Electrical coupling means (58,60) are provided on the armature shaft (52) for couling electrical current to or from the armature (54). The first bearing assembly (12) is disposed on the armature shaft (52) between the electrical coupling means (58,60) and the armature (54). A plurality of brushes are provided for transferring electrical current to or from the electrical coupling means (58,60). A slinger (10) is disposed on the armature shaft (52) between the electrical coupling means (58,60) and the first bearing assembly (12) and is rotatable with the armature shaft (52) and adapted to protect the first bearing assembly (12) from dust produced by the brushes.

## Description

The present invention relates to an electrical machine and to a slinger for use in shielding a bearing thereof.

In the past, electrical machines, such as electrical motors, have been of a closed type, in which the armature, slip rings and brush assembly of the machine are disposed within the motor casing, between the two sets of bearing assemblies which support the ends of the armature shaft.

More recently, it has become desirable to shorten the distance between the two bearings of the armature shaft. This can have the effect of enabling the armature shaft to be shorter, thereby making the electrical machine more compact, and of enabling the electrical machine to operate at higher speeds.

A practical way of bringing the two bearing assemblies closer together in such a motor is to locate the slip rings and brush assembly outside the motor casing. In such an arrangement, while the armature is located within the motor housing between the two sets of bearing assemblies, the slip rings are disposed outside of the armature housing adjacent one of the bearings. Electrical motors of this type are sometimes called "inboard bearing" motors.

A problem which has resulted with such inboard bearing motors is that in use the carbon dust formed by wear of the brushes drifts to the bearing assembly adjacent the slip rings and eventually causes the bearing assembly to fail.

The present invention seeks to provide an improved electrical machine and a slinger for shielding a bearing assembly thereof.

According to an aspect of the present invention, there is provided an electrical machine as specified in claim 1.

With this arrangement, the slinger of the machine ensures that no dust from the brushes reaches the adjacent bearing assembly. The substantially planar annular body portion of the machine is responsible for forming a centrifugal force for driving dust approaching the slinger radially away from the slinger and from the first bearing assembly.

The term electrical machine as used herein is intended to refer to electrical motors, electrical generators, alternators and any other electrical machine of similar form. The term electrical coupling means as used herein refers to slip rings, a commutator or other suitable electrical coupling for coupling electrical energy to or from the armature.

Preferably, the electrical machine comprises spacing means adapted to cause at least a portion of the slinger to be spaced from the first bearing assembly. This feature can ensure that the slinger does not contact any part of the first bearing assembly of the machine which moves relative thereto, and can also permit normal cooling of the bearing assembly.

In an embodiment, the spacing means is a contact surface provided on the slinger, the contact surface being adapted to contact a portion of the first bearing assembly to cause the body portion to be spaced from the first bearing assembly.

Preferably, the slinger comprises a web connecting the body portion to a central portion of the slinger, the web being in the form of a substantially annular channel having a concave surface and a convex surface, the convex surface extending beyond the plane of the body portion and including the contact surface. This arrangement can be readily manufactured, for example by stamping out the slinger from a sheet of metal.

In an alternative embodiment, the slinger comprises a central portion connected to the body portion by a web, the central portion comprising a surface lying in a plane spaced from and substantially parallel to the plane of the body portion and forming the contact surface.

Advantageously, the central portion of the slinger has a substantially circular cylindrical shape and extends beyond the plane of the body portion in a direction substantially opposite to the contact surface, the longitudinal axis of the central portion lying substantially perpendicular to the plane of the body portion. Such a design of central portion can ensure that in use the slinger is firmly secured to the armature shaft.

In another embodiment, the slinger comprises a central portion having a generally frusto-conical shape and a longitudinal axis which extends substantially perpendicular to the plane of the body portion and in use in a direction substantially towards the electrical coupling means.

The central portion may include an interior surface cooperable with the armature shaft of the machine to secure the slinger onto the armature shaft such that the body portion is spaced from the first bearing assembly.

The armature shaft of the machine may generally have a first cross-sectional area and include a first end of reduced cross-sectional area, the electrical contact means being provided on the first end, the central portion of the slinger having an internal surface adapted to cooperate with an interface of the armature shaft between the first cross-sectional area and the reduced cross-sectional area.

Preferably, the slinger comprises an annular rib extending from an outer extremity of the body portion and in use towards the electrical coupling means of the machine.

According to another aspect of the present invention, there is provided a slinger for shielding a bearing assembly in an electrical machine as specified in claim 11.

The slinger has a form which enables the bearing assembly to be shielded, yet does not require any additional components in its assembly on an armature shaft of an electrical machine and does not prevent normal operation or cooling of the bearing.

An embodiment of the present invention is described below, by way of example only, with reference to the accompanying drawings, in which:
Figure 1 shows in cross-section a side elevational view of an embodiment of slinger and of a bearing assembly to be shielded by the slinger;
Figure 2 is a plan view of the slinger of Figure 1;
Figure 3 shows in cross-section a side elevational view of an electrical machine including the slinger of Figure 1;
Figure 4 is a side elevational view, in partial cross-section, of a second embodiment of slinger fitted to an armature shaft of an electrical
motor; and Figure 5 is a side elevational view, in partial cross-section, of a third embodiment of slinger.

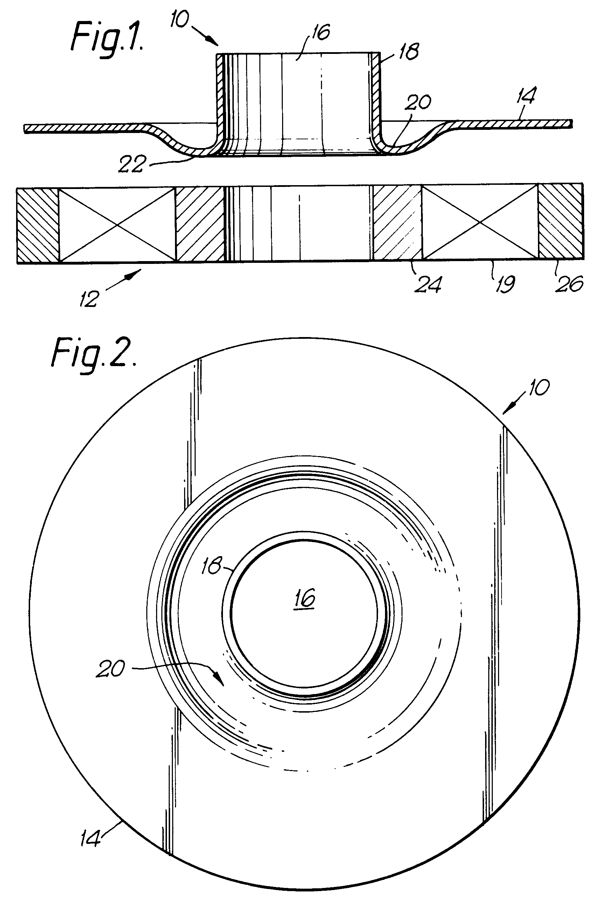

Referring to Figures 1 and 2, an embodiment of slinger 10 for shielding a bearing assembly 12 of an electrical machine has a body portion 14 of substantially planar annular shape. At a central aperture 16, the slinger 10 includes a cylindrical portion 18 having a longitudinal axis lying susbtantially perpendicular to the plane of the body portion 14. As can be seen in Figure 2, the cylindrical portion 16 is substantially circular in axial cross-section.

An intermediate web 20 connecting the body portion 14 to the cylindrical portion 18 has the form of a channel and includes a concave surface and a convex surface. The convex surface extends beyond the plane of the body portion 14 and provides a contact surface 22.

Figure 1 also shows an example of bearing assembly 12 to be shielded by the slinger 10. The bearing assembly 12 includes inner and outer annular members 24,26 which provide inner and outer races for bearing 28, which typically consists of a plurality of ball bearings. When used in an electrical machine, the inner annular member 24 is secured to an armature shaft of the machine, while the outer annular member 26 is secured to the housing of the machine, such that the armature shaft is supported by and rotates with the inner annular member 24.

The contact surface 22 of the slinger 10 is designed so as to abut only the inner annular member 24 of the bearing assembly 12 and to cause the body portion 14 to be spaced from the bearing assembly 12, and in particular from the bearing 19 and outer annular member 26. The amount of space between body portion 14 and the bearing assembly 12 is chosen so as to ensure that in use the body portion 14 never contacts the bearing 28 or outer annular member 26 and also permits cooling of the bearing assembly.

In an alternative embodiment, the planar body portion 14 of the slinger 10 may extend all the way to the cylindrical portion 18, the contact surface 22 being provided by an annular rib, by a plurality of projections or by any other suitable means. Similarly, a spacer element may be provided, such as suitable washer. Alternatively, the contact surface 22 may be omitted and the slinger placed at a distance from the bearing assembly 12.

The slinger 10 can be made of any suitable material, for example it may be moulded form a plastics material. Preferably, the slinger 10 is stamped from a sheet of a non-corrosive metal or alloy, for example aluminium.

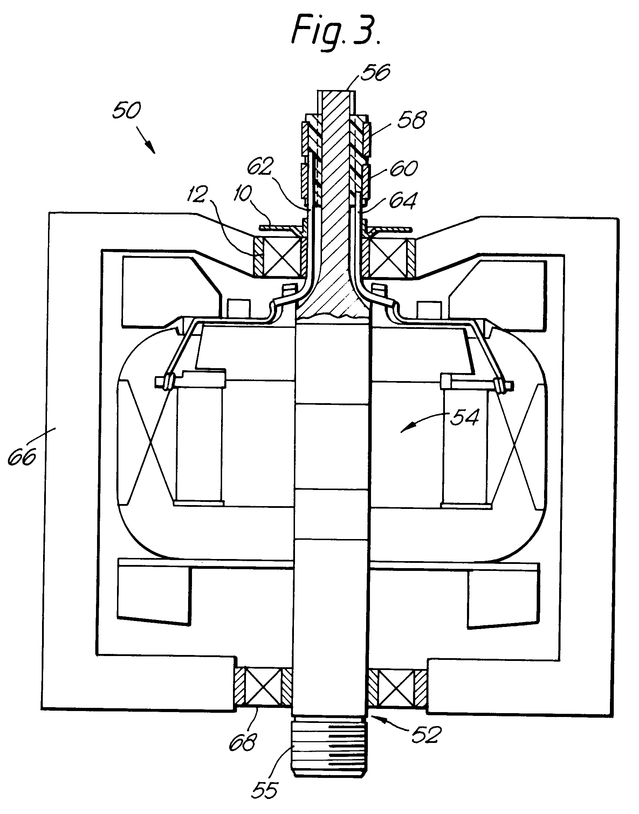

Referring now to Figure 3, the "inboard bearing" generator shown includes an armature shaft 52 onto which is secured an armature 54 which, typically, includes an electrical winding. The armature shaft 52 includes a first, threaded end 55 which in use is secured to a mechanical device, such as a vehicle engine, for causing the armature shaft to rotate, thereby developing an induced current in the armature. A second bearing assembly 68 is provided at the threaded end 52 to support this end of the armature shaft 52.

The opposite end 56 of the armature shaft 52 has a reduced cross-section and is supported by the bearing assembly 12. First and second slip rings 58,60 are also secured to this end 56 of the armature shaft 52 and are connected electrically to respective ends of the armature winding by means of first and second electrical connectors 62,64. These electrical connectors 62,64 are received within respective grooves in the armature shaft 52.

In practice, a cylindrical plastics support is fitted over the reduced cross-section end 56 of the armature shaft 52 and the slip rings 58,60 are secured onto the plastic support.

Not shown in Figure 3 are first and second electrical brushes, each of which abuts a respective one of the slip rings 58,60 to pass electrical current from the generator 50 to an electrical device (not shown), such as a vehicle battery or lights. In the case of an electric motor, electrical current passes in the opposite direction, from the brushes to the armature winding.

The two bearing assemblies 12,68 are secured to a housing 66 which also supports a stator (not shown). In a vehicle alternator, the stator is typically a three-phase winding.

As will be noted, the bearing assembly 12 is disposed between the slip rings 58,60 and the armature 54, such that the slip rings lie outside the housing 66. In use, a brush holder with built-in slip ring shield is provided to protect the slip rings 58,60 and to support the brush assemblies.

Also outside the housing 66 is a slinger 10, secured to the armature shaft 52 between the slip rings 58,60 and the bearing assembly 12. As described above, the slinger 10 rests on the inner annular member 24 of the bearing assembly 12, while its body portion 14 lies spaced from the bearing assembly 12. The cylindrical portion 18 of the slinger 10 extends from the body portion 14 towards the slip rings 58,60 and secures the slinger 10 firmly on the armature shaft 52 to cause the slinger 10 to rotate with the armature shaft 52.

When the threaded end 55 of the armature shaft 52 is connected to a rotating mechanical device (not shown) to cause electrical current to be induced in the armature 54, this current is collected by the brushes from the slip rings 58,60 and passed to one or more associated electrical devices. However, as the brushes slide across the surfaces of the slip rings 58,60, the brushes wear producing carbon dust, some of which will drift towards the bearing assembly 12. Dust drifting in this direction will eventually come into proximity of the slinger 10 and will be thrown axially sideways relative to the armature shaft due to the centrifugal force generated by the rotation of the slinger 10, and will thereby be diverted away from the bearing assembly 12. In this manner, the bearing assembly 12 remains shielded from the dust produced by the brushes and its operating life is thereby lengthened.

It will be noted in both Figures 1 and 2 that the body portion 14 of the slinger 12 extends over only a portion of the outer annular member 26 of the bearing assembly 12. This arrangement facilitates the assembly of the generator 50 and does not significantly affect the shielding properties of the slinger 10, since dust at the end of the body portion 14 of the slinger 10 will be thrown radially outwardly of the slinger 10 by the centrifugal force produced by the slinger.

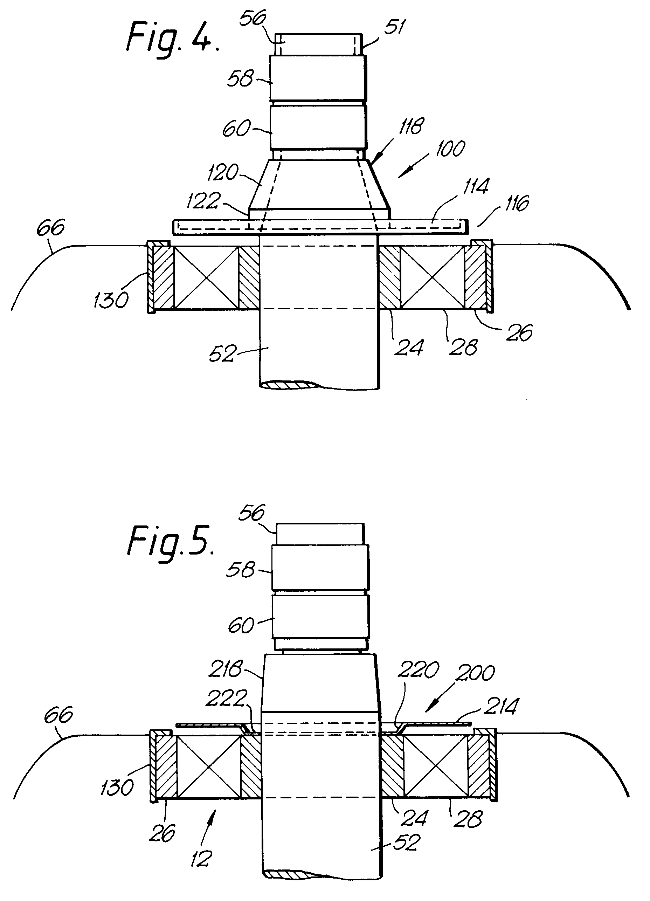

Figure 4 shows an alternative embodiment of slinger.

The slinger 100 includes a planar annular body portion 114 supporting a hollow central member 118 which is formed of a frusto-conical portion 120 connected by an annular wall 122 to the body portion 114. The frusto-conical portion 120 tapers in a direction away from the body portion 114. The slinger 100 may, optionally, also include an annular rib 116 integrally formed at the outer extremity of the body portion 114 and extending substantially perpendicularly from the plane of the body portion 114 in the same direction as the central member 118. This annular rib 116 serves to retain dust on the slinger 100 for subsequent removal.

The interface of the armature shaft 52 between the main portion of the armature shaft 52 and the reduced cross-section end 56 has a tapered form, as shown in dotted outline in Figure 4. The central member 118 has an internal surface designed so as to cause the slinger 100 to lie on the armature shaft 52 in a manner to provide a gap between the slinger 100 and the bearing assembly 12, thereby avoiding the need for a contact surface 22. The slinger 100 may be secured in place on the armature shaft 52 by a suitable adhesive, such as an epoxy resin, of any other suitable means. Alternatively, the tapered portion of the armature shaft 52 and the internal surface of the central portion 118 may be designed so as to connect together by a snap-fit.

The cylindrical plastics support supporting the slip rings is shown in this Figure under reference numeral 51.

Another advantage of the frusto-conical shape of the central portion 118 is that dust drifting to the slinger 100 can be diverted in a more controlled manner.

Also shown in Figure 4 is a tolerance ring 130, which may be provided between the outer annular member 26 of the bearing assembly 12 and the housing 66 of the electrical machine to ensure that there is a tight fit of the bearing assembly in the housing 66. Where such a tolerance ring 130 is provided, the outer diameter of the slinger 100 is preferably smaller than the inner diameter of the tolerance ring to facilitate assembly.

In the preferred embodiment, the inner annular member 24 of the bearing assembly 12 is directly attached on the armature shaft 52.

Another variant of slinger is shown in Figure 5. In this embodiment, the interface between the main portion of the armature shaft 52 and the end of reduced cross-section 56 has a frusto-conical shape. A slinger 200 fits over the armature shaft 52 and includes a planar annular body portion 214 connected to a planar annular central portion 222 by a connecting web 220. The annular central portion 222 lies in a plane spaced from and substantially parallel to that of the body portion 214. When fitted to the armature shaft 52, the central portion 222 rests on the bearing assembly 12, and specifically on the inner annular member 24 of the bearing assembly, while the body portion 214 is spaced from the bearing assembly 12 by an amount sufficient to ensure that in use it does not contact the bearing 28 and the outer annular member 26 and permits cooling of the bearing assembly.

The slingers described above may be secured to the armature shaft by a friction or interference fit, by adhesive such as an epoxy resin, by a snap-fit, or by any combination of these or in any other suitable manner.

As will be apparent to the skilled person, the various features of the different embodiments of slinger described above can be combined with one another as to provide the desired design of slinger.

The disclosures in British patent application no 9214774.3, from which this application claims priority, and in the abstract accompanying this application are incorporated herein by reference.

## Claims

1. An electrical machine comprising an armature (54) carried on an armature shaft (52); a stator cooperable magnetically with the armature; a housing (66); first and second bearing assemblies (12,68) disposed on the armature shaft at opposite ends of the armature respectively and adapted to secure the armature rotatably in the housing; electrical coupling means (58,60) provided on the armature shaft for coupling electrical current to or from the armature, wherein the first bearing assembly (12) is disposed on the armature shaft between the electrical coupling means and the armature; a plurality of brushes adapted to cooperate with the electrical coupling means; and a slinger (10,100,200) disposed on the armature shaft between the electrical coupling means and the first bearing assembly and rotatable with the armature shaft, the slinger including a substantially planar annular body portion (14,114,214) adapted to lie in a plane substantially parallel to the first bearing assembly, wherein in use dust coming into proximity of the slinger is diverted radially of the slinger by centrifugal force produced during rotation of the slinger, the dust thereby being diverted away from the bearing assembly.

2. An electrical machine according to claim 1, comprising spacing means (22,222) adapted to cause at least a portion of the slinger to be spaced from the first bearing assembly.

3. An electrical machine according to claim 2, wherein the spacing means (22,222) is a contact surface provided on the slinger, the contact surface being adapted to contact a portion of the first bearing assembly to cause the body portion to be spaced from the first bearing assembly.

4. An electrical machine according to claim 3, wherein the slinger comprises a web (20) connecting the body portion to a central portion of the slinger, the web being in the form of a substantially annular channel having a concave surface and a convex surface, the convex surface extending beyond the plane of the body portion and including the contact surface.

5. An electrical machine according to claim 3, wherein the slinger comprises a central portion (222) connected to the body portion (214) by a web (220), the central portion comprising a surface lying in a plane spaced from and substantially parallel to the plane of the body portion and forming the contact surface.

6. An electrical machine according to claim 4 or 5, wherein the central portion (18) of the slinger has a substantially circular cylindrical shape and extends beyond the plane of the body portion in a direction substantially opposite to the contact surface, the longitudinal axis of the central portion lying substantially perpendicular to the plane of the body portion.

7. An electrical machine according to any preceding claim, wherein the slinger comprises a central portion (120) having a generally frusto-conical shape and a longitudinal axis which extends substantially perpendicular to the plane of the body portion and in use in a direction substantially towards the electrical coupling means.

8. An electrical machine according to claim 7, wherein the central portion (120) includes an interior surface cooperable with the armature shaft to secure the slinger onto the armature shaft such that the body portion is spaced from the first bearing assembly.

9. An electrical machine according to claim 8, wherein the armature shaft (52) generally has a first cross-sectional area and includes a first end (56) of reduced cross-sectional area, the electrical coupling means being provided on the first end, the central portion of the slinger having an internal surface adapted to cooperate with an interface of the armature shaft between the first cross-sectional area and the reduced cross-sectional area.

10. An electrical machine according to any preceding claim, wherein the slinger comprises an annular rib (116) extending from an outer extremity of the body portion and in use towards the electrical coupling means.

11. A slinger for shielding a bearing assembly in an electrical machine, which bearing includes an inner annular member (24) including an inner race, an outer annular member (26) including an outer race, and a bearing (19) disposed between the inner and outer races; the slinger (10) comprising a body portion (14) adapted to lie substantially over the bearing assembly, securing means (18) for securing the slinger to an armature shaft of an electrical machine, and spacing means (22) cooperable with the inner annular member of a bearing assembly for use in keeping the body portion of the slinger spaced from the bearing assembly.

12. A slinger according to claim 11, comprising a web (20) connecting the body portion to the securing means, the web being in the form of a substantially annular channel having a concave surface and a convex surface, the convex surface extending beyond the plane of the body portion and forming the spacing means.

13. A slinger according to claim 11, wherein securing means (222) comprises a surface lying in a plane spaced from and substantially parallel to the plane of the body portion and forming the spacing means.

14. A slinger according to claim 11, 12 or 13, wherein the securing means (18) has a substantially circular cylindrical shape and extends beyond the plane of the body portion in a direction substantially opposite to the spacing means, the longitudinal axis of the securing means lying substantially perpendicular to the plane of the body portion.

15. A slinger according to claim 11, 12 or 13, wherein the securing means (118) is generally frusto-conical, the longitudinal axis of the securing means lying substantially perpendicular to the plane of the body portion.

16. A slinger according to any one of claims 11 to 15, comprising an annular rib (116) extending from an outer extremity of the body portion and in a direction substantially opposite to the spacing means.
